# EUROPÄISCHE PATENTSCHRIFT

(11) **EP 0 866 811 B1**
(45) Veröffentlichungstag und Bekanntmachung des Hinweises auf die Patenterteilung: **29.05.2002**
(21) Anmeldenummer: 97913140.6
(22) Anmeldetag: 15.10.1997
(51) Int. Cl.: C08F 2/22, C08F 220/12, C09J 133/06, C09D 133/06

(54) **VERFAHREN ZUR HERSTELLUNG NIEDRIGVISKOSER, WÄSSRIGER POLYMERISATDISPERSIONEN MIT POLYMERGEHALTEN VON WENIGSTENS 50 VOL-%**
METHOD FOR THE MANUFACTURE OF LOW VISCOSITY AQUEOUS POLYMER DISPERSIONS WITH A POLYMER CONTENT OF AT LEAST 50 VOLUME %
PROCEDE DE FABRICATION DE DISPERSIONS POLYMERES AQUEUSES DE FAIBLE VISCOSITE, A TENEUR EN POLYMERES D'AU MOINS 50 % EN VOLUME

(30) Priorität: 16.10.1996 DE 19642762
(43) Veröffentlichungstag der Anmeldung: 30.09.1998
(73) Patentinhaber: BASF AKTIENGESELLSCHAFT, 67056 Ludwigshafen (DE)
(72) Erfinder: DAMES, Burkhardt, D-67069 Ludwigshafen (DE)
(74) Vertreter: Kinzebach, Werner, Dr.
(86) Internationale Anmeldenummer: EP9705662
(87) Internationale Veröffentlichungsnummer: WO9816560

(56) Entgegenhaltungen:
- DE-A- 2 103 610
- FR-A- 2 180 748
- US-A- 5 476 897

## Beschreibung

Die vorliegende Erfindung betrifft ein Verfahren zur Herstellung niedrigviskoser, wäßriger Polymerisatdispersionen mit Polymergehalten von wenigstens 50 Vol-%, bezogen auf die Polymerisatdispersion, worin die Polymerisatteilchen eine polymodale Größenverteilung aufweisen.

Wäßrige Polymerisatdispersionen finden aufgrund ihrer Eigenschaft, beim Verdampfen des wäßrigen Dispersionsmediums Polymerisatfilme zu bilden, in vielfacher Weise Verwendung, beispielsweise als Bindemittel für Anstrichfarben, als Beschichtungsmassen für Leder und Papier, als Ausrüstungen für Gewebe oder als Klebefilme.

Hochkonzentrierte wäßrige Polymerisatdispersionen sind von Vorteil, da der Aufwand für das Verdampfen des wäßrigen Dispergiermediums bei der Filmbildung oder bei der Herstellung von Polymerpulvern reduziert und andererseits eine geringere Transport- und Lagerkapazität erforderlich ist.

Von Nachteil ist jedoch, daß mit zunehmendem Polymergehalt die Viskosität der Polymerisatdispersionen zunimmt. Dies führt zu Problemen bei der Herstellung (Abführung der Reaktionswärme) als auch bei der Verarbeitung. Weiterhin neigen solch hochkonzentrierte Polymerisatdispersionen zur Mikrokoagulation (Stippenbildung). Mikrokoagulate lassen sich aufgrund ihrer geringen Größe (< 40 µm) nur mit hohem Aufwand aus den Polymerisatdispersionen entfernen und führen insbesondere zu Störungen bei der Verfilmung der wäßrigen Polymerisatdispersionen. Die genannten Effekte sind vermutlich auf die Packung der Polymerisatteilchen in der Polymerisatdispersion zurückzuführen. Aus diesem Grund empfiehlt es sich, den Gehalt wäßriger Polymerisatdispersionen als Polymervolumenkonzentration in Volumenprozent anzugeben (≙ Polymergehalt in Gew.-% geteilt durch Dichte des Polymerisats; in Vol-%).

Es hat sich gezeigt, daß Polymerisatdispersionen, die aus zwei oder mehreren, hinsichtlich ihres Teilchendurchmessers verschiedenen Teilchensorten bestehen (polymodale Polymerisate), bei gleichem Feststoffgehalt in der Regel eine geringere Viskosität aufweisen als solche mit einer engen Größenverteilung (monomodal). Im folgenden werden auch solche Polymerisatdispersionen als polymodale Polymerisatdispersionen bezeichnet, in denen die Polymerisatteilchen keine diskreten engverteilten Teilchengrößen aufweisen, sondern in denen die Teilchengrößen breit verteilt sind. Derartige Polymerisatdispersionen werden häufig auch als polydispers bezeichnet.

Die DE-A 31 47 008 beschreibt ein Verfahren zur Herstellung hochkonzentrierter, wäßriger Kunststoffdispersionen mit einer bimodalen Größenverteilung der Polymerisatteilchen durch Emulsionspolymerisation ethylenisch ungesättigter Monomerer in Gegenwart von zwei Ausgangspolymerisaten mit unterschiedlicher Teilchengröße. Auch wenn bei diesem Verfahren Polymerisatdispersionen mit Polymergehalten von bis zu 70 Gew.-% erhalten werden, erscheint doch die Verwendung zweier unterschiedlicher Ausgangspolymerisate aufwendig, da diese in gesonderten Verfahrensschritten hergestellt werden müssen. Zudem weisen die in den Beispielen beschriebenen Dispersionen Viskositätswerte auf, die für viele praktische Anwendungen zu hoch sind.

Die US-A 5,476,897 beschreibt ein Verfahren zur Herstellung wäßriger Polymerisatdispersionen auf der Basis von Acrylestern mit Polymergehalten von 40 bis 50 Gew.-%, wobei man in einem ersten Schritt einen Saatlatex in Gegenwart einer Propencarbonsäure herstellt, den hierdurch erhältlichen Saatlatex mit einer Base neutralisiert und anschließend weitere Monomere aufpolymerisiert. Die erhaltenen Polymerisate zeichnen sich durch hohe Lagerstabilität aus. Im Wege dieses Verfahrens werden jedoch nur Polymerisatdispersionen mit Polymergehalten von bis zu 50 Gew.-% erhalten.

Die DE-OS 21 03 610 beschreibt ein Verfahren zur Herstellung eines bimodalen Latex durch Polymerisation ethylenisch ungesättigter Monomere in Gegenwart eines Salzes einer Seifen-bildenden Carbonsäure, das dadurch gekennzeichnet ist, daß man die Polymerisation anfänglich bei einem pH-Wert durchführt, bei dem 7,5 bis 70% der besagten Carbonsäure in der neutralisierten Form vorliegen, und anschließend, wenn wenigstens 15 Gew.-% der Monomere einpolymerisiert sind, den pH-Wert der Dispersion erhöht. Nachteilig bei diesem Polymerisationsverfahren sind die lange Reaktionsdauer sowie die Verwendung größerer Mengen Seifen-bildender Emulgatoren (> 4 Gew.-%, bezogen auf fertiges Polymerisat), was sich nachteilig auf die Eigenschaften der Polymerisate auswirkt.

Der vorliegenden Erfindung liegt somit die Aufgabe zugrunde, ein Verfahren bereitzustellen, das es erlaubt, wäßrige Polymerisatdispersionen mit hohen Polymervolumenkonzentrationen, niedriger Viskosität sowie einem reduzierten Gehalt an Mikrokoagulaten herzustellen. Außerdem soll das Verfahren weitgehend unabhängig von der Art der verwendeten Monomere, insbesondere jedoch unabhängig von der Art der verwendeten Emulgatoren sein.

Es wurde nun überraschenderweise gefunden, daß Polymerisatdispersionen, die Monomere mit funktionellen Gruppen, welche abhängig vom pH-Wert der Polymerisationsmischung als geladene funktionelle Gruppen vorliegen, oder C₁-C₁₂-Alkylester monoethylenisch ungesättigter Mono- oder Dicarbonsäuren einpolymerisiert enthalten, dann eine polydisperse oder polymodale Verteilung der Polymerisatteilchen und damit auch bei hohen Polymerkonzentrationen eine niedrige Viskosität aufweisen, wenn man während der Polymerisationsreaktion den pH-Wert der Reaktion so ändert, daß die neutralen funktionellen Gruppen der einpolymerisierten Monomere oder die auf anderem Wege auf dem Polymerisat entstandenen funktionellen Gruppen in geladene Gruppen überführt werden.

Die vorliegende Erfindung betrifft somit ein Verfahren zur Herstellung niedrigviskoser, wäßriger Polymerisatdispersionen mit Feststoffgehalten von wenigstens 50 Vol-% und polymodaler Verteilung der Polymerisatteilchengrößen durch radikalische, wäßrige Emulsionspolymerisation ethylenisch ungesättigter Monomere, umfassend wenigstens ein Monomer A, das ausgewählt ist unter Monomeren, die wenigstens eine neutrale funktionelle Gruppe aufweisen, welche abhängig vom pH-Wert der Reaktionsmischung in eine geladene funktionelle Gruppe überführt werden kann und den C₁-C₁₂-Alkylestern monoethylenisch ungesättigter Mono- oder Dicarbonsäuren, nach einem Zulaufverfahren, wobei man wenigstens 90 Gew.-% der zu polymerisierenden Monomere kontinuierlich oder stufenweise zu der Polymerisationsreaktion gibt, dadurch gekennzeichnet, daß man während der Zugabe der Monomere zu der Polymerisationsreaktion, wenn wenigstens 10 Gew.-% und höchstens 90 Gew.-% der zu polymerisierenden Monomere sich im Reaktionsansatz befinden, den pH-Wert der Reaktionsmischung durch Zugabe einer Säure oder einer Base so ändert, daß wenigstens ein Teil der durch Einpolymerisation der Monomere A oder der auf anderem Wege auf dem Polymer erzeugten neutralen funktionellen Gruppen in geladene funktionelle Gruppen überführt werden.

Die Erfindung betrifft ferner wäßrige Polymerisatdispersion mit einer polymodalen oder polydispersen Teilchengrössenverteilung der Polymerisatteilchen, mit einer Viskosität unterhalb 1000 mPas und mit einem Feststoffgehalt oberhalb 50 Vol.-%, erhältlich durch das beschriebene Verfahren, enthaltend keine seifenbildende Carbonsäuren.

Die Erfindung betrifft auf die Verwendung der wäßrigen Polymerisatdispersion als Bindemittel für Beschichtungsmassen, Klebemittel und zur Ausrüstung von Papier, Leder, Geweben oder Vliesstoffen.

Bei den Monomeren A handelt es sich in der Regel um Brönsted-Säuren oder -Basen, die je nach pH-Wert des Reaktionsmediums in ihrer neutralisierten oder in ihrer ionischen Form vorliegen. Geeignete Monomere A sind beispielsweise ethylenisch ungesättigte Carbonsäuren oder ethylenisch ungesättigte Amine, und hierunter insbesondere ethylenisch ungesättigte Stickstoff-Heterocyclen mit pK_{B}-Werten < 9. Beispiele für ethylenisch ungesättigte Carbonsäuren sind Acrylsäure, Methacrylsäure, Crotonsäure, 2-Ethylpropensäure, 2-Propylbutensäure, 2-n-Butylpropensäure, 2-, 3- oder 4-Vinylbenzoesäure, Vinylnaphthoesäuren, oder Dicarbonsäuren, wie Maleinsäure, Fumarsäure, Itaconsäure und Citraconsäure. Ebenfalls geeignet sind die Halbester der genannten Dicarbonsäuren mit C₁-C₁₂-Alkanolen, C₅-C₁₀-Cycloalkanolen oder C₆-C₂₀-Arylalkoholen. Geeignete Alkanole sind z.B. Methanol, Ethanol, i-Propanol, n-Propanol, n-Butanol, 2-Butanol, i-Butanol, t-Butanol, n-Pentanol, n-Hexanol, n-Octanol, 2-Ethylhexanol, n-Decanol, n-Dodecanol oder 2-Propylheptanol. Geeignete Cycloalkanole sind z.B. Cyclopentanol oder Cyclohexanol sowie deren C₁-C₄-alkylsubstituierten Derivate. Geeignete Arylalkohole sind z.B. Phenol, Kresole, halogensubstituierte Phenole oder Naphthole, die auch weitere Substituenten, z.B. C₁-C₄-Alkyl oder C₁-C₄-Alkoxy, aufweisen können. Basische Vinylheterocyclen sind hier gesättigte und aromatisch ungesättigte Heterocyclen mit einer Vinylgruppe und mindestens einem basischen Ring-Stickstoffatom, z.B. N-Vinylimidazol, 2-Methyl-1-vinylimidazol, 4-Methyl-1-vinylimidazol, 5-Methyl-1-vinylimidazol, 2-Ethyl-1-vinylimidazol, 2-Propyl-1-vinylimidazol, 2-Isopropyl-1-vinylimidazol, 2-Phenyl-1-vinylimidazol, 1-Vinyl-4,5-benzimidazol, 2-, 3-, 4-Vinylpyridin sowie 2-Methyl-5-vinylpyridin.

Darüber hinaus sind als Monomere A solche Monomere geeignet, die abhängig vom pH-Wert des Reaktionsmediums unter Reaktionsbedingungen in Brönsted-Säuren oder -Basen überführt werden. Beispiele hierfür sind Anhydride der genannten ethylenisch ungesättigten Carbonsäuren, z.B. Acrylsäureanhydrid, Methacrylsäureanhydrid oder besonders bevorzugt Maleinsäureanhydrid. Weiterhin kann man als Monomere A Ester der genannten ethylenisch ungesättigten Carbonsäuren mit C₁-C₁₂-Alkanolen, z.B. Methylacrylat, Methylmethacrylat, Ethylacrylat, Ethylmethacrylat, n-Propylacrylat, n-Propylmethacrylat, n-Butyl-, iso-Butyl-, tert.-Butylacrylat, n-Butyl-, iso-Butyl-, tert.-Butylmethacrylat, Octylacrylat, Octylmethacrylat, 2-Ethylhexylacrylat, 2-Ethylhexylmethacrylat, Decylacrylat, Decylmethacrylat, 2-Propylheptylacrylat und/oder 2-Propylheptylmethacrylat verwenden, insbesondere dann, wenn der pH-Wert durch Zugabe einer Base geändert wird. Möglicherweise werden unter Polymerisationsbedingungen die Esterfunktionen der freien oder einpolymerisierten Monomere durch die verwendete Base partiell verseift.

Werden als Monomere A Brönsted-Säuren oder -Basen verwendet, so machen sie vorzugsweise wenigstens 0,1 Gew.-%, insbesondere 0,2 bis 5 Gew.-% und besonders bevorzugt 0,5 bis 3 Gew.-% der zu polymerisierenden Monomere aus. Handelt es sich hingegen um Monomere, die erst unter den Reaktionsbedingungen bei dem entsprechenden pH-Wert in die Brönsted-Säuren oder -Basen überführt werden, liegt ihr Anteil höher, insbesondere dann, wenn die Umwandlung nur teilweise oder, gemessen an der Polymerisationsgeschwindigkeit, nur langsam abläuft. Werden als Monomere A die Ester der genannten ethylenisch ungesättigten Carbonsäuren verwendet, liegt ihr Anteil in Summe bei wenigstens 10 Gew.-%, vorzugsweise wenigstens 20 Gew.-%, der zu polymerisierenden Monomere.

Hinsichtlich der übrigen Monomere bestehen keine Beschränkungen. Geeignete Monomere umfassen C₂-C₆-Olefine, wie Ethylen, Propylen, n-Buten, Isobuten, vinylaromatische Monomere mit 8 bis 20, vorzugsweise 8 bis 14 C-Atomen, wie Styrol, α-Methylstyrol, 2-, 3-oder 4-Methylstyrol, 4-Phenylbutylstyrol sowie 1- und/oder 2-Vinylnaphthalin, o-Chlorstyrol, C₁-C₁₂-Alkylvinylether, wie Methyl-, Ethyl-, n-Propyl-, i-Propyl-, n-Butyl-, i-Butyl, 2-Ethylhexylvinylether, Vinylester von C₁-C₁₈-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinyllaurat und Vinylstearat. Weiterhin kommen Ester α,β-ethylenisch ungesättigter C₃-C₁₀-Mono- oder Dicarbonsäuren mit C₁-C₁₂-, vorzugsweise C₁-C₁₀-und insbesondere C₁-C₈-Alkanolen in Frage. Auch können Ester dieser Säuren mit C₅-C₁₀-Cycloalkanolen oder C₆-C₂₀-Arylalkoholen verwendet werden. Geeignet sind insbesondere Ester der Acrylsäure, der Methacrylsäure, der Crotonsäure, der Maleinsäure, der Fumarsäure und der Itaconsäure. Speziell handelt es sich um (Meth)acrylsäuremethylester, (Meth)acrylsäureethylester, (Meth)acrylsäure-n-butylester, (Meth)acrylsäure-iso-butylester und (Meth)-acrylsäure-2-ethylhexylester, Maleinsäuredimethylester oder Maleinsäuredi-n-butylester. Weiterhin kommen Nitrile α,β-monoethylenisch ungesättigter Carbonsäuren, wie Acrylnitril oder Methacrylnitril in Betracht. Darüber hinaus können auch C₄-C₈-konjugierte Diene, wie 1,3-Butadien und Isopren eingesetzt werden. Die genannten Monomere (Monomere B) bilden üblicherweise den Hauptanteil der zu polymerisierenden Monomere und machen vorzugsweise 70 bis 99,9 Gew.-%, insbesondere 80 bis 99 Gew.-% der zu polymerisierenden Monomere aus.

Als modifizierende Monomere werden neben den Monomeren A und B vorzugsweise bis zu 10 Gew.-%, insbesondere bis 5 Gew.-% Monomere C mit einpolymerisiert, deren Homopolymerisate eine erhöhte Wasserlöslichkeit oder -quellbarkeit aufweisen. Hierbei handelt es sich beispielsweise um die Amide der genannten ethylenisch ungesättigten Mono- oder Dicarbonsäuren oder um N-Vinyllactame. Beispiele hierfür sind Acrylamid, Methacrylamid sowie ferner N-Vinylpyrrolidon. Wird der pH-Wert der Polymerisationsreaktion durch Zugabe einer Base geändert, dann können auch solche Monomere C mit einpolymerisiert werden, die in wäßriger Phase als Anionen vorliegen, z.B. die Alkalisalze ethylenisch ungesättigter Sulfonsäuren, wie Vinylsulfonsäure, Styrolsulfonsäure, Methallylsulfonsäure, Acrylamidoethansulfonsäure, Acryiamidopropansulfonsäure etc.

Weiterhin können Monomere D einpolymerisiert werden, die die Festigkeit der aus der Polymeremulsion hergestellten Polymerisatfilme erhöhen. Diese werden in untergeordneter Menge, in der Regel bis 10 Gew.-%, vorzugsweise bis 5 Gew.-% und insbesondere bis 1 Gew.-%, bezogen auf die Gesamtmenge der zu polymerisierenden Monomere, mit einpolymerisiert. Hierbei handelt es sich um polyfunktionelle Monomere, die neben der ethylenisch ungesättigten Bindung eine Epoxy-, Hydroxy-, N-Alkylol- oder eine Carbonylgruppe enthalten. Beispiele hierfür sind die N-Hydroxyalkyl- und N-Alkylolamide der genannten ethylenisch ungesättigten Carbonsäuren, beispielsweise 2-Hydroxyethyl(meth)acrylamid und N-Methylol(meth)acrylamid. Ebenfalls geeignet sind Verbindungen, die zwei oder mehr nicht-konjugierte, ethylenisch ungesättigte Bindungen aufweisen, wie die Diester zweiwertiger Alkohole mit den obengenannten ethylenisch ungesättigten Monocarbonsäuren, die Vinyl oder Allylester der ethylenisch ungesättigten Carbonsäuren oder Divinylaromaten. Beispiele hierfür sind Alkylenglykoldiacrylate und -dimethacrylate, wie Ethylenglykoldiacrylat, 1,3-Butylenglykoldiacrylat, 1,4-Butylenglykoldiacrylat, Propylenglykoldiacrylat, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, Divinylbenzol, Divinylnaphthalin, N,N'-Divinylimidazolin-2-on oder Triallylcyanurat.

In einer bevorzugten Ausführungsform der vorliegenden Erfindung werden Monomergemische verwendet, die jeweils bezogen auf die Gesamtmonomermenge 10 bis 100 Gew.-%, vorzugsweise 20 bis 99,9 Gew.-% wenigstens eines Esters einer der obengenannten monoethylenisch ungesättigten Carbonsäuren mit einem C₁-C₁₂-Alkanol oder C₅-C₁₀-Cycloalkanol, vorzugsweise ein C₁-C₁₂-Alkylacrylats oder ein C₁-C₁₂-Alkylmethacrylats:
0 bis 90 Gew.-%, vorzugsweise 0 bis 80 Gew.-% wenigstens eines Monomers, ausgewählt unter vinylaromatischen Monomeren, Acrylnitril oder Methacrylnitril,
0 bis 50 Gew.-%, vorzugsweise 0,1 bis 5 Gew.-% einer monoethylenisch ungesättigten Carbonsäure, Dicarbonsäure oder eines monoethylenisch ungesättigten Dicarbonsäureanhydrids, sowie gegebenenfalls
Monomere C und Monomere D in den dort angegebenen Mengen enthalten.

Die Herstellung der Polymerisate erfolgt auf dem Wege einer wäßrigen Emulsionspolymerisation nach einem Batch- oder vorzugsweise nach einem Zulaufverfahren. Unter einem Zulaufverfahren ist hier zu verstehen, daß nur ein geringer Teil der zu polymerisierenden Monomere im Reaktionsgefäß vorgelegt wird und die Hauptmenge, vorzugsweise wenigstens 80 Gew.-%, besonders bevorzugt wenigstens 90 Gew.-% und insbesondere wenigstens 95 Gew.-% der zu polymerisierenden Monomere kontinuierlich mit gleichbleibender oder zunehmender Zulaufrate oder stufenweise zu der Polymerisationsreaktion gegeben werden.

Während der Zugabe der Monomere wird, wie bereits oben erwähnt, der pH-Wert der Reaktionsmischung derart geändert, daß die neutralen funktionellen Gruppen der einpolymerisierten Monomere A oder die auf anderem Wege während der Polymerisationsreaktion am Polymer erzeugten neutralen funktionellen Gruppen wenigstens teilweise in geladene funktionelle Gruppen überführt werden. Dies bedeutet, daß man bei Verwendung von Brönsted-Säuren als Monomere A der Reaktionsmischung eine Base, hingegen bei Verwendung von Brönsted-Basen als Monomere A, der Reaktionsmischung eine Säure zugibt. Dabei ist es vorteilhaft, wenn sich der pKₐ-Wert der zuzusetzenden Base vom pKₐ-Wert der zu polymerisierenden Säure (bzw. der pKₐ-Wert der zuzugebenden Säure von dem der zu polymerisierenden Base) um wenigstens 6, vorzugsweise um wenigstens 8 pKₐ-Einheiten unterscheidet. Werden als Monomere A ausschließlich die Ester ethylenisch ungesättigter Carbonsäuren verwendet, ändert man den pH-Wert durch Zugabe von Basen.

Bei den zuzusetzenden Basen handelt es sich vorzugsweise um Alkalimetallhydroxide, Erdalkalimetallhydroxide oder um Ammoniak, insbesondere um Alkalimetallhydroxide wie NaOH oder KOH. Bei den zuzusetzenden Säuren handelt es sich vorzugsweise um Mineralsäuren oder um organische Sulfonsäuren wie p-Toluolsulfonsäure, insbesondere um Salzsäure oder um Schwefelsäure.

Die Zugabe der Säure bzw. der Base kann kontinuierlich während der Zugabe der Monomere erfolgen. Vorzugsweise wird die Base bzw. die Säure jedoch stufenweise (in mehreren Portionen) oder in einer Portion zugegeben.

Vorzugsweise erfolgt die Zugabe der Säure bzw. der Base, nicht bevor wenigstens 1%, vorzugsweise wenigstens 5% und insbesondere wenigstens 10% der zu polymerisierenden Monomere sich im Reaktionsansatz befinden. Sie sollte vorzugsweise spätestens dann beendet sein, wenn 90%, vorzugsweise 60%, insbesondere 40% der Monomere zum Reaktionsansatz gegeben worden sind. Wird die Säure bzw. die Base stufenweise oder auf einmal zur Reaktionsmischung gegeben, kann für den Moment der Zugabe die Monomerzugabe unterbrochen werden. Bevorzugt wird die Monomerzugabe jedoch nicht unterbrochen.

Die Menge an Base bzw. Säure beträgt bei Verwendung von Brönsted-Säuren bzw. -Basen etwa 0,2 bis 4 Äquivalente, vorzugsweise 0,3 bis 2 Äquivalente, bezogen auf die sich bei Beginn der Säurebzw. Basenzugabe im Polymerisationsansatz befindlichen sauren bzw. basischen Monomere A. Bei Verwendung von Monomeren, die erst durch Hydrolyse in Brönsted-Säuren bzw. -Basen überführt werden, setzt man etwa 0,01 mol bis 10 mol, vorzugsweise 0,03 mol bis etwa 1 mol, vorzugsweise 0,05 mol bis 0,7 mol Base pro kg Monomere, die sich bei Beginn der Basen- bzw. Säurezugabe im Polymerisationsansatz befinden, ein. Gleiches gilt für die obengenannten Ester ethylenisch ungesättigter Carbonsäuren.

Die Polymerisationsreaktion wird vorzugsweise gestartet, indem man wenigstens einen Teil des Initiators in das bei Reaktionstemperatur befindliche Reaktionsgefäß gibt. Hierbei kann das Reaktionsgefäß neben Wasser ein Ausgangspolymerisat, Emulgator und gegebenenfalls auch einen Teil der Monomere enthalten. Vorzugsweise ist die Vorlage jedoch frei von Monomeren. Ebenfalls ist es möglich, wenigstens einen Teil des Initiators im Reaktionsgefäß zusammen mit Wasser, einem Teil des Emulgators und gegebenenfalls einem Ausgangspolymerisat vorzulegen, die Vorlage auf Reaktionstemperatur zu erwärmen und anschließend die Monomere zuzugeben.

Die Art und Weise, wie der Initiator der Emulsionspolymerisation zudosiert wird, ist nicht kritisch. Der Initiator kann sowohl vollständig im Polymerisationsgefäß vorgelegt oder aber nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab, und kann vom Fachmann je nach Bedarf gewählt werden.

Polymerisationsdruck und Polymerisationstemperatur sind gleichfalls von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist ebenfalls möglich, so daß die Polymerisationstemperatur auch 100°C überschreiten und bis zu 130°C betragen kann. Vorzugsweise werden leicht flüchtige Monomere, wie Ethylen oder Butadien, unter erhöhtem Druck polymerisiert.

Grenzflächenaktive Substanzen, die sich für die Durchführung der Emulsionspolymerisation eignen, sind die üblicherweise für diese Zwecke eingesetzten Schutzkolloide und/oder Emulgatoren. In einer Ausführungsform der vorliegenden Erfindung werden keine Seifen-bildenden Carbonsäuren, wie Harzsäuren, verwendet. Die grenzflächenaktiven Substanzen werden üblicherweise in Mengen von bis zu 5 Gew.-%, vorzugsweise 0,2 bis 3 Gew.-% und insbesondere 0,5 bis 2 Gew.-%, bezogen auf die zu polymerisierenden Monomere, verwendet.

Geeignete Schutzkolloide sind beispielsweise Polyvinylalkohole, Polysaccharide wie Stärken, Stärkederivate oder Cellulose-Derivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411-420. Auch Gemische aus Emulgatoren und/oder Schutzkolloiden können verwendet werden. Vorzugsweise werden als grenzflächenaktive Substanzen Emulgatoren eingesetzt, deren relative Molekulargewichte im Unterschied zu den Schutzkolloiden üblicherweise unter 2000 Dalton liegen. Sie können sowohl anionischer, kationischer als auch nicht-ionischer Natur sein. Bei Verwendung von Brönsted-Basen als Monomere A werden vorzugsweise kationische und/oder nicht-ionische Emulgatoren verwendet. Bei Verwendung von Brönsted-Säuren als Monomere A werden vorzugsweise anionische und/oder nicht-ionische Emulgatoren, insbesondere anionische Emulgatoren als alleinige Emulgatoren, verwendet.

Brauchbare nicht-ionische Emulgatoren sind araliphatische oder aliphatische nicht-ionische Emulgatoren, beispielsweise ethoxylierte Mono-, Di- und Trialkylphenole (EO-Grad: 3 bis 50, Alkylrest: C₄-C₁₀), Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad von 10 bis 50 sowie ethoxylierte Monoalkylphenole.

Geeignete anionische Emulgatoren sind beispielsweise Alkali- und Ammoniumsalze von Alkylsulfaten (Alkylrest: C₈-C₁₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z.B. aus der US-A 4,269,749, und im Handel erhältlich, beispielsweise als Dowfax® 2A1 (Warenzeichen der Dow Chemical Company).

Geeignete kationische Emulgatoren sind vorzugsweise quartäre Ammoniumhalogenide, z.B. Trimethylcetylammoniumchlorid, Methyltrioctylammoniumchlorid, Benzyltriethylammoniumchlorid oder quartäre Verbindungen von N-C₆-C₂₀-Alkylpyridinen, -morpholinen oder -imidazolen, z.B. N-Laurylpyridiniumchlorid.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate als auch um Azoverbindungen handeln. Es werden auch kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden. Bevorzugte Initiatoren sind die Ammonium- oder Alkalimetallsalze von Peroxosulfaten oder Peroxodisulfaten, insbesondere Natrium- oder Kaliumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Im erfindungsgemäßen Verfahren können auch Ausgangspolymerisate (Saatpolymere) verwendet werden. Vorzugsweise werden sie als wäßrige Dispersionen eingesetzt. Ihre Zusammensetzung ist im Prinzip von der zu polymerisierenden Monomerzusammensetzung unabhängig. Bevorzugt werden Saatpolymere, deren Zusammensetzung hinsichtlich der Hauptmonomere B der zu polymerisierenden Monomermischung vergleichbar ist. Besonders bevorzugt werden derartige Polymerisate, wenn ihr mittlerer Teilchendurchmesser im Bereich von 20 nm bis 400 nm, vorzugsweise 80 nm bis 200 nm liegt. Wird die Polymerisationsreaktion in Gegenwart derartiger Ausgangspolymerisate durchgeführt, so werden diese erfindungsgemäß in Mengen von vorzugsweise 0,005 bis 10 Gew.-%, vorzugsweise 0,1 bis 5 Gew.-%, bezogen auf die zu polymerisierenden Monomere im Reaktionsgefäß vorgelegt.

Das erfindungsgemäße Verfahren liefert in Abhängigkeit von der Art der Säure- bzw. Basenzugabe Polymerisate mit einer polymodalen, vorzugsweise einer bimodalen Polymerisatteilchengrößenverteilung. Bei kontinuierlicher Zugabe von Säure bzw. Base findet man in der Regel polydisperse Teilchengrößenverteilungen, wohingegen bei stufenweiser Zugabe von Säure bzw. Base polymodale Teilchengrößenverteilungen mit diskreten Teilchengrößenmaximen erhältlich sind. Durch die bevorzugte einmalige Zugabe von Säure bzw. Base werden bimodale Polymerisatdispersionen erhalten.

Bevorzugte bimodale Polymerisatdispersionen weisen 0,05 bis 90 Gew.-%, vorzugsweise 1 bis 90 Gew.-%, insbesondere 5 bis 90 Gew.-%, einer Teilchensorte mit einem gewichtsmittleren Teilchendurchmesser im Bereich von 50 bis 400 nm, vorzugsweise 100 bis 350 nm und 10 bis 99,95 Gew.-%, vorzugsweise 10 bis 99 Gew.-% und insbesondere 10 bis 95 Gew.-%, einer Teilchensorte mit einem gewichtsmittleren Teilchendurchmesser im Bereich von 400 bis 1500 nm, vorzugsweise 400 bis 1100 nm, auf.

Hierbei ist unter dem gewichtsmittleren Teilchendurchmesser das Gewichtsmittel der Teilchengröße zu verstehen, wie sie mittels einer analytische Ultrazentrifuge entsprechend den Methoden von W. Scholtan und H. Langen, Kolloid-Z. und Z.-Polymere 250 (1972) 782-796 bestimmt werden. Die Ultrazentrifugen-Messung liefert die integrale Massenverteilung des Teilchendurchmessers einer Probe, aus der sich entnehmen läßt, wieviel Gewichtsprozent der Teilchen einen Durchmesser gleich oder unterhalb einer bestimmten Größe aufweisen. Der d₅₀-Wert steht dabei für die Teilchengröße, die von 50% der Teilchen unterschritten wird.

Die erfindungsgemäß erhältlichen Dispersionen weisen in der Regel Viskositäten unterhalb 1000 mPa.s, vorzugsweise unterhalb 500 mPa.s auf und ganz besonders bevorzugt unterhalb 350 mPa.s, bei Polymergehalten von etwa 65 Gew.-% (Viskosität nach Brookfield, DIN 53019, gemessen bei 23°C und einem Geschwindigkeitsgefälle d = 250 s⁻¹).

### Beispiele

Die angegebenen Teilchendurchmesser wurden mit einer analytischen Ultrazentrifuge (Eight-Cell-AUC-Multiplexer) nach dem Dichte-Gradienten Verfahren bestimmt. Die Methode wurde von W. Mächtle in S.E. Harding et al (Hrsg.) "Analytical Ultrazentrifugation in Biochemistry and Polymer Science" Kap. 10, Cambridge, England 1992 beschrieben.

Die angegebenen Viskositäten wurden mit einem Contraves Rheomat 115 nach DIN 53019 bei 23°C und einem Geschwindigkeitsgefälle von d = 250 sec⁻¹ bestimmt.

### Herstellung der erfindungsgemäßen Polymerisatdispersionen

In einem Polymerisationsgefäß mit drei getrennten Zuläufen legt man 125 g Wasser und 20,41 g einer Polymersaat-Dispersion (49 Gew.-% in Wasser, 99 Teile Butylacrylat, 1 Teil Acrylsäure, d₅₀ = 169 nm) vor und erwärmt auf 90°C. Nun gibt man von Zulauf 2 innerhalb 5 min 5% und den Rest innerhalb von 3 h 55 min zu. 5 min nach Start von Zulauf 2 startet man Zulauf 1 und gibt diesen gleichmäßig innerhalb 4 h zu. Zulauf 3 wird 30 min bzw. 60 min nach dem Start von Zulauf 1 als eine Portion zugegeben. Nach Beendigung von Zulauf 1 wird die Temperatur eine weitere Stunde bei 90°C gehalten.

| | |
|---|---|
| Zulauf 1 | siehe Tabelle 1 |
| | |
| Zulauf 2 | 89,9 g Wasser |
| | 3,0 g Natriumperoxodisulfat |
| | |
| Zulauf 3 | wäßrige Natronlauge (15 gew.-%ig), siehe Tabelle 1 |

Die erhaltenen Polymerisatdispersionen 1 bis 7 und V8 werden durch die in Tabelle 2 angegebenen Werte charakterisiert. Die Teilchengrößenverteilung von Beispiel 1 wird durch Fig. 1 wiedergegeben. Der Polymergehalt der Polymerisatdispersionen liegt bei etwa 65 Gew.-%.

**Tabelle 1**

| | Vorlage | | Zulauf 1 | | | | Zulauf 3 | |
|---|---|---|---|---|---|---|---|---|
| Bsp | H₂O [g] | Saat [g] | H₂O [g] | Emulgator¹⁾ Typ[g] | M1²⁾ [g] | M2³⁾[g] | NaOH⁴⁾ [g] | t min |
| 1 | 104,5 | 40,8 | 292,4 | A 53,3 | 980 | 20 | 8,0 | 30 |
| 2 | 104,5 | 40,8 | 327,9 | B 17,8 | 1000 | 0 | 2,9 | 30 |
| 3 | 125,0 | 20,4 | 275,6 | A 53,3 | 980 | 20 | 4,7 | 30 |
| 4 | 125,0 | 20,4 | 266,4 | A 53,3 | 980 | 20 | 16,7 | 30 |
| 5 | 125,0 | 20,4 | 271,5 | A 53,3 | 980 | 20 | 10,0 | 60 |
| 6 | 104,5 | 40,8 | 288,4 | A 53,3 | 980 | 20 | 8,0 | 60 |
| 7 | 104,5 | 40,8 | 305,7 | C 40,0 | 980 | 20 | 2,9 | 30 |
| V8 | 104,5 | 40,8 | 307,9 | C 40,0 | 980 | 20 | 0 | - |

| | | | | | | | | |
|---|---|---|---|---|---|---|---|---|
| ¹⁾ A Natriumisododecylbenzolsulfonat 15%ige wäßrige Lösung B Dowfax® 2A1 45%ige wäßrige Lösung C Natriumsalz des sulfatierten Octylphenolethoxylats (Ethoxylierungsgrad (25) | | | | | | | | |
| ²⁾ M1 n-Butylacrylat | | | | | | | | |
| ³⁾ M2 Acrylsäure | | | | | | | | |
| ⁴⁾ 15%ige wäßrige Lösung | | | | | | | | |

**Tabelle 2**

| | Viskosität¹⁾ [mPas] | Teilchensorte 1 | | Teilchensorte 2 | |
|---|---|---|---|---|---|
| | | d₅₀ ²⁾ [nm] | [Gew.-%] | d₅₀ ²⁾ [nm] | [Gew.-%] |
| 1 | 320 | 143 | 60 | 468 | 40 |
| 2 | 270 | 196 | 50 | 532 | 50 |
| 3 | 190 | 195 | 55 | 618 | 45 |
| 4 | 320 | 167 | 62 | 552 | 38 |
| 5 | 260 | 113 | 59 | 572 | 41 |
| 6 | 61 | 131 | 31 | 533 | 69 |
| 7 | 180 | 263 | 11 | 600 | 89 |
| V8 | 620 | - | | 600 | 100 |

| | | | | | |
|---|---|---|---|---|---|
| ¹⁾ Nach DIN 53 019 bei D = 250 s⁻¹ und T = 23°C | | | | | |
| ²⁾ Bestimmt mittels analytischer Ultrazentrifugen (s.o.) | | | | | |

## Patentansprüche

1. Verfahren zur Herstellung niedrigviskoser, wäßriger Polymerisatdispersionen mit Feststoffgehalten von wenigstens 50 Vol-% und polymodaler Verteilung der Polymerisatteilchengrößen durch radikalische, wäßrige Emulsionspolymerisation ethylenisch ungesättigter Monomere, umfassend wenigstens ein Monomer A, das ausgewählt ist unter Monomeren, die wenigstens eine neutrale funktionelle Gruppe aufweisen, welche abhängig vom pH-Wert der Reaktionsmischung in eine geladene funktionelle Gruppe überführt werden kann und den C₁-C₁₂-Alkylestern monoethylenisch ungesättigter Mono- oder Dicarbonsäuren, nach einem Zulaufverfahren, wobei man wenigstens 90 Gew.-% der zu polymerisierenden Monomere kontinuierlich oder stufenweise zu der Polymerisationsreaktion gibt, **dadurch gekennzeichnet, daß** man während der Zugabe der Monomere zu der Polymerisationsreaktion, wenn wenigstens 10 Gew.-% und höchstens 90 Gew.-% der zu polymerisierenden Monomere sich im Reaktionsansatz befinden, den pH-Wert der Reaktionsmischung durch Zugabe einer Säure oder einer Base so ändert, daß wenigstens ein Teil der durch Einpolymerisation der Monomere A oder der auf anderem Wege auf dem Polymer erzeugten neutralen funktionellen Gruppen in geladene funktionelle Gruppen überführt werden.

2. Verfahren nacht Anspruch 1, **dadurch gekennzeichnet, daß** die Änderung des pH-Wertes durch Zugabe einer Base, insbesondere ein Alkali- oder Erdalkalihydroxid oder Ammoniak, erfolgt.

3. Verfahren nach Anspruch 1, **dadurch gekennzeichnet, daß** die Monomere A ausgewählt sind unter ethylenisch ungesättigten Carbonsäuren, Dicarbonsäuren, Carbonsäureanhydriden und den C₁-C₁₂-Alkylestern monoethylenisch ungesättigter Mono- oder Dicarbonsäuren.

4. Verfahren nach Anspruch 1, **dadurch gekennzeichnet, daß** die Änderung des pH-Wertes durch Zugabe einer Säure erfolgt.

5. Verfahren nach Anspruch 4, **dadurch gekennzeichnet, daß** die Monomere A ausgewählt sind unter vinylsubstituierten Heterocyclen mit einem pK_{B}-Wert unterhalb 9.

6. Verfahren nach einem der vorhergehenden Ansprüche, **dadurch gekennzeichnet, daß** die Änderung des pH-Wertes stufenweise oder durch einmalige Zugabe einer Säure bzw. einer Base erfolgt.

7. Wäßrige Polymerisatdispersion mit einer polymodalen oder polydispersen Teilchengrössenverteilung der Polymerisatteilchen, mit einer Viskosität unterhalb 1000 mPas und mit einem Feststoffgehalt oberhalb 50 Vol.-%, erhältlich durch ein Verfahren nach einem der Ansprüche 1 bis 6, enthaltend keine seifenbildende Carbonsäuren.

8. Wäßrige Polymerisatdispersion nach Anspruch 7, deren Polymerisatteilchen eine bimodale Größenverteilung aufweisen.

9. Polymerisatdispersion nach Ansprüchen 7 und 8, worin das Polymerisat:
0,05 bis 90 Gew.-% einer Teilchensorte mit einem gewichtsmittleren Teilchendurchmesser im Bereich von 50 bis 400 nm und
10 bis 99,95 Gew.-% einer Teilchensorte mit einem gewichtsmittleren Teilchendurchmesser im Bereich von 400 bis 1500 nm enthält.

10. Verwendung der wäßrigen Polymerisatdispersion nach einem der Ansprüche 7 bis 9 als Bindemittel für Beschichtungsmassen, Klebemittel und zur Ausrüstung von Papier, Leder, Geweben oder Vliesstoffen.

## Claims

1. A process for preparing aqueous polymer dispersions of low viscosity with solids contents of at least 50% by volume and with polymodal distribution of the polymer particle sizes by means of free-radical aqueous emulsion polymerization of ethylenically unsaturated monomers comprising at least one monomer A which is selected from monomers having at least one neutral functional group which, depending on the pH of the reaction mixture, can be converted into a charged functional group and from C₁-C₁₂-alkyl esters of monoethylenically unsaturated mono- or dicarboxylic acids by a feed process in which at least 90% by weight of monomers to be polymerized are added continuously or in stages to the polymerization reaction, which comprises altering the pH of the reaction mixture by adding an acid or a base during the addition of the monomers to the polymerization reaction, if at least 10% by weight and at most 90% by weight of the monomers to be polymerized are in the reaction mixture, such that at least some of the neutral functional groups produced in the polymer by copolymerization of the monomers A or by other means are converted to charged functional groups.

2. A process as claimed in claim 1, wherein the pH is altered by adding a base, in particular an alkali metal hydroxide or alkaline earth metal hydroxide or ammonia.

3. A process as claimed in claim 1, wherein the monomers A are selected from ethylenically unsaturated carboxylic acids, dicarboxylic acids, carboxylic anhydrides and the C₁-C₁₂-alkyl esters of monoethylenically unsaturated mono- or dicarboxylic acids.

4. A process as claimed in claim 1, wherein the pH is altered by adding an acid.

5. A process as claimed in claim 4, wherein the monomers A are selected from vinyl-substituted heterocycles having a pK_{B}-value of below 9.

6. A process as claimed in any of the preceding claims, wherein the pH is altered in stages or by single addition of an acid or of a base.

7. An aqueous polymer dispersion with a polymodal or polydisperse polymer particle size distribution, a viscosity below 1000 mPas and a solids content above 50% by volume, obtainable by a process as claimed in any of claims 1 to 6, containing no soap-forming carboxylic acids.

8. An aqueous polymer dispersion as claimed in claim 7, whose polymer particles have a bimodal size distribution.

9. A polymer dispersion as claimed in claims 7 and 8, wherein the polymer comprises:
from 0.05 to 90% by weight of a type of particle having a weight-average diameter in the range from 50 to 400 nm and
from 10 to 99.95% by weight of a type of particle having a weight-average diameter in the range from 400 to 1500 nm.

10. The use of an aqueous polymer dispersion as claimed in any of claims 7 to 9 as a binder for coating compositions, adhesives and for finishing paper, leather and woven or nonwoven fabrics.

## Revendications

1. Procédé de préparation de dispersions polymères aqueuses de faible viscosité, à teneur en matière solide d'au moins 50% en volume et présentant une granulométrie polymodale du polymère, au moyen d'une polymérisation aqueuse par voie radicalaire d'une émulsion de monomères à insaturation éthylénique comprenant au moins un monomère A choisi parmi les monomères présentant au moins un groupe fonctionnel neutre que l'on peut transformer en groupe fonctionnel chargé, processus qui dépend du pH du mélange réactionnel, et d'esters d'alkyle en C₁ à C₁₂ dérivés d'acides monocarboxyliques ou dicarboxyliques à insaturation monoéthylénique, par un procédé d'addition en ajoutant dans la réaction de polymérisation au moins 90 % en poids des monomères destinés à la polymérisation en continu ou par étapes, **caractérisé en ce que** l'on fait varier le pH du mélange réactionnel pendant l'ajout des monomères dans la réaction de polymérisation, à un moment où la masse réactionnelle contient au moins 10% en poids et au plus 90% en poids des monomères destinés à la polymérisation, par l'ajout d'un acide ou d'une base, de sorte qu'au moins une partie des groupes fonctionnels neutres, que l'on a produit dans le polymère au moyen de la polymérisation des monomères A ou par un autre moyen, sont transformés en groupes fonctionnels chargés.

2. Procédé selon la revendication 1, **caractérisé en ce que** l'on procède à la variation du pH par l'ajout d'une base, en particulier d'un hydrate alcalin ou alcalino-terreux, ou d'ammoniac.

3. Procédé selon la revendication 1, **caractérisé en ce que** l'on choisit les monomères A dans le groupe formé par les acides carboxyliques à insaturation éthylénique, les acides dicarboxyliques , les anhydrides carboxyliques et les esters d'alkyle en C₁ à C₁₂ dérivés d'acides monocarboxyliques ou dicarboxyliques à insaturation monoéthylénique.

4. Procédé selon la revendication 1, **caractérisé en ce que** l'on procède à la variation du pH par l'ajout d'un acide.

5. Procédé selon la revendication 4, **caractérisé en ce que** l'on choisit les monomères A parmi les composés hétérocycliques à substitution vinylique présentant un pK_{B} inférieur à 9.

6. Procédé selon l'une quelconque des revendications précédentes, **caractérisé en ce que** l'on procède à la variation du pH par étapes ou par un seul ajout d'acide ou de base.

7. Dispersion polymère aqueuse présentant une granulométrie polymodale ou polydispersée du polymère, une viscosité inférieure à 1 000 mPas et une teneur en matière solide supérieure à 50% en volume, que l'on peut obtenir au moyen d'un procédé selon l'une quelconque des revendications 1 à 6, exempt d'acide carboxylique saponifiant.

8. Dispersion polymère aqueuse selon la revendication 7 présentant une granulométrie bimodale du polymère.

9. Dispersion polymère selon les revendications 7 et 8 comprenant un polymère qui contient:
- 0,05% à 90% en poids d'un type de particule présentant une granulométrie moyenne en masse comprise dans la plage de 50 nm à 400 nm et
- 10% à 99,95% en poids d'un type de particule présentant une granulométrie moyenne en masse comprise dans la plage de 400 nm à 1 500 nm.

10. Mise en oeuvre de la dispersion polymère aqueuse selon l'une quelconque des revendications 7 à 9 en tant que liant pour les substances de revêtement, les colles et pour le finissage de papier, de cuir, de tissus ou d'étoffes nappées.
